(19) Europäisches Patentamt
European Patent Office
Office européen des brevets

(11) **EP 3 675 476 B1**

(12) **EUROPEAN PATENT SPECIFICATION**

(45) Date of publication and mention
of the grant of the patent:
**15.11.2023 Bulletin 2023/46**

(21) Application number: **19219439.7**

(22) Date of filing: **23.12.2019**

(51) International Patent Classification (IPC):
**H04N 1/60** *(2006.01)* **G06K 7/14** *(2006.01)*

(52) Cooperative Patent Classification (CPC):
**H04N 1/6033**

(54) **COLOR PREDICTION MODEL CONSTRUCTION METHOD AND COLOR PREDICTION MODEL CONSTRUCTION PROGRAM**

FARBVORHERSAGEMODELLKONSTRUKTIONSVERFAHREN UND FARBVORHERSAGEMODELLKONSTRUKTIONSPROGRAMM

PROCÉDÉ ET PROGRAMME DE CONSTRUCTION DE MODÈLES DE PRÉDICTION DE COULEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2018 JP 2018240741**

(43) Date of publication of application:
**01.07.2020 Bulletin 2020/27**

(73) Proprietor: **SCREEN Holdings Co., Ltd.**
**Kyoto 602-8585 (JP)**

(72) Inventor: **YOKOUCHI, Kenichi**
**Kyoto-shi, Kyoto 602-8585 (JP)**

(74) Representative: **Kilian Kilian & Partner mbB**
**Aidenbachstraße 54**
**81379 München (DE)**

(56) References cited:
**US-A- 5 109 275 US-A1- 2007 291 312**
**US-A1- 2010 091 305**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a method for constructing a color prediction model for predicting a color of a patch in a color chart used for predicting a color obtained by overprinting inks of a plurality of colors (typically, a plurality of colors including a spot color).

Description of Related Art

In recent years, digital printing apparatuses have become popular in the printing industry. However, in the labeling and packaging field, printing (offset printing, gravure printing, flexographic printing, etc.) with printing apparatuses using printing plates (hereinafter referred to as a "conventional printing apparatus" or simply referred to as a "printing apparatus") is still often performed in recent years. Meanwhile, there is an increasing demand for quick delivery for design and content production, and when there are some changes in design or the like in a case in which a conventional printing apparatus is used, cost for recreation of the printing plate or retrogression of the process is high, which is a significant problem. In this respect, a digital printing apparatus does not use a printing plate, and thus, does not need an operation for exchanging or recreating the printing plate. That is, by adopting a digital printing apparatus, it is possible to carry out especially small-lot printing at low cost, and therefore, it is also possible to respond to the demand of quick delivery for design and content production at low cost.

Meanwhile, in the labeling and packaging field, spot colors tend to be often used for enhancing color expression. For this reason, in order to perform printing with a digital printing apparatus using print data generated for printing with a conventional printing apparatus, it is necessary that colors obtained by overprinting spot color inks be predicted and the predicted colors be reproduced with the digital printing apparatus. In the following, prediction values of values (specifically, reflectance or tristimulus values X, Y, and Z in the CIE 1931 XYZ color space) identifying colors obtained by overprinting inks of a plurality of colors is referred to as an "overprint prediction value".

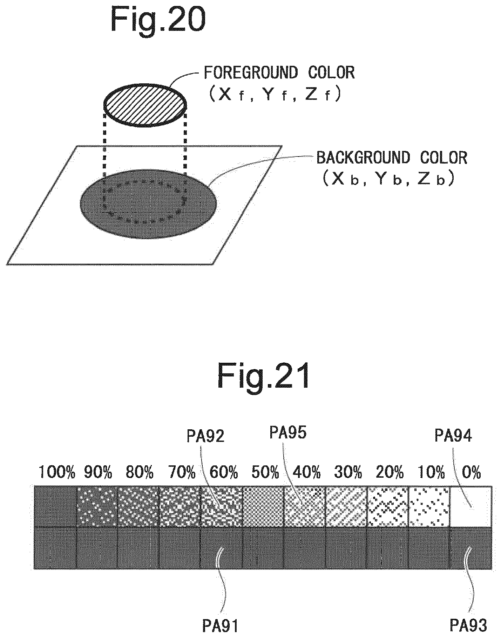

The "Recommendations for predicting spot color overprints" (http://www.color.org/ICC_white_paper_43_Draft2kd.doc) by K. Deshpande and P. Green discloses a method (hereinafter, referred to as "Deshpande et al. method") for relatively easily predicting colors (overprint prediction values) obtained by overprinting inks of a plurality of colors including a spot color. In the Deshpande et al. method, overprint prediction values are expressed as in the following Equations (1) to (3) using tristimulus values X, Y, and Z (see Fig. 20).

$$X = j_x \times (X_b \times X_f) + k_x \quad \dots \quad (1)$$

$$Y = j_y \times (Y_b \times Y_f) + k_y \quad \dots \quad (2)$$

$$Z = j_z \times (Z_b \times Z_f) + k_z \quad \dots \quad (3)$$

Here, $X_b$, $Y_b$, and $Z_b$ are tristimulus values of a background color, $X_f$, $Y_f$, and $Z_f$ are tristimulus values of a foreground color, $j_x$, $j_y$, and $j_z$ are scaling coefficients, and $k_x$, $k_y$, and $k_z$ are constants. Hereinafter, $j_x$, $j_y$, $j_z$, $k_x$, $k_y$, and $k_z$ are collectively referred to as "overprint coefficient".

Meanwhile, color reproduction methods include additive color mixing and subtractive color mixing. In the case of printing, the subtractive color mixing is applied for color reproduction. In this regard, if ideal subtractive color mixing is performed, the stimulus value X of the color obtained by overprinting is represented by "$X_b \times X_f$" (the same applies to the stimulus values Y and Z), for example. However, in order to obtain a more accurate value, it is necessary to make a correction in consideration of an error caused by the use of an opaque ink and reflection of light on the surface. Therefore, in the Deshpande et al. method, a correction using a linear equation is performed as shown in the above Equations (1) to (3).

In the Deshpande et al. method, a color chart as schematically shown in Fig. 21 is used, for example. This color chart is called a "CxF chart". In the example shown in Fig. 21, the CxF chart is composed of twenty-two patches. The eleven patches in the upper part are patches obtained by printing an ink of a target spot color on a base material such as paper at a dot percentage in increments of 10%. The eleven patches in the lower part are patches obtained by printing an ink of a target spot color on black (black solid) at a dot percentage in increments of 10%. The overprint prediction value is calculated using the value (colorimetry value) obtained by the colorimetry of the patches in the CxF chart described above.

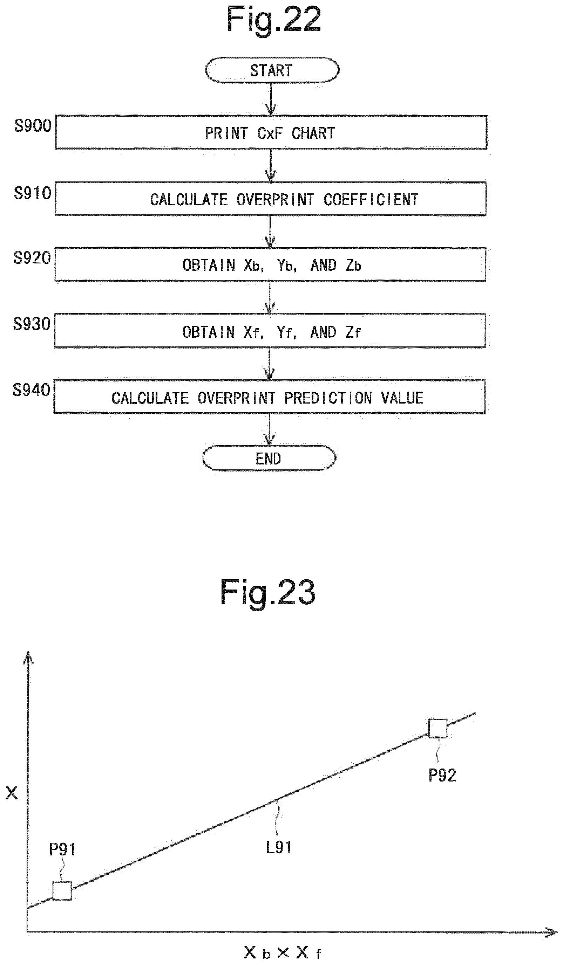

Hereinafter, the Deshpande et al. method will be described in detail with reference to the flowchart in Fig. 22, taking, as an example, calculation of an overprint prediction value in the case where a background color is a spot color at a dot percentage of 40% (referred to as a "spot color 1" for convenience) and a foreground color is another spot color at a dot percentage of 60% (referred to as a "spot color 2" for convenience).

First, the CxF chart is printed using the ink of spot color 1, and further, the CxF chart is printed using the ink of spot color 2 (step S900).

Next, the overprint coefficients $j_x$, $j_y$, $j_z$, $k_x$, $k_y$, and $k_z$ of the above Equations (1) to (3) regarding the spot color 2 are calculated using the CxF chart printed using the ink of spot color 2 (referred to as "spot color 2 chart" for convenience) (step S910). In this regard, focusing on the above Equation (1), for example, the practical maximum value and the minimum value for $X_b \times X_f$ are values obtained by the ink of the spot color 2 being applied on the base material and black (black solid), respectively. The same applies to $Y_b \times Y_f$ and $Z_b \times Z_f$. Therefore, in order to calculate the overprint coefficient, in a coordinate system representing the above Equations (1) to (3) (see Fig. 23. Note that Fig. 23 shows only the coordinate system representing the above Equation (1)), the coordinates representing the stimulus value of a state where the ink of the spot color 2 at a dot percentage of 60% is applied on black are defined as a first calibration point P91, and the coordinates representing the stimulus value of a state where the ink of the spot color 2 at a dot percentage of 60% is applied on the base material are defined as a second calibration point P92.

Focusing on, for example, X among the tristimulus values, values are assigned as follows for the first calibration point P91 with respect to the above Equation (1). The value obtained by colorimetry of the patch PA93 in the spot color 2 chart (black stimulus value) is assigned to $X_b$, the value obtained by colorimetry of the patch PA92 in the spot color 2 chart (stimulus value of a state where the ink of the spot color 2 at a dot percentage of 60% is applied on the base material) is assigned to $X_f$, and the value obtained by colorimetry of the patch PA91 in the spot color 2 chart (stimulus value of a state where the ink of the spot color 2 at a dot percentage of 60% is applied on black) is assigned to X (see Fig. 21). In addition, for the second calibration point P92, values are assigned as follows with respect to the above Equation (1). The value obtained by colorimetry of the patch PA94 in the spot color 2 chart (stimulus value of base material) is assigned to $X_b$, the value obtained by colorimetry of the patch PA92 in the spot color 2 chart (stimulus value of a state where the ink of the spot color 2 at a dot percentage of 60% is applied on the base material) is assigned to $X_f$ and X (see Fig. 21).

The overprint coefficients $j_x$ and $k_x$ are calculated by solving a simultaneous equation consisting of the equation relating to the first calibration point P91 and the equation relating to the second calibration point P92. That is, an equation representing a straight line denoted by reference numeral L91 in Fig. 23 is obtained. The overprint coefficients $j_y$, $j_z$, $k_y$, and $k_z$ are similarly calculated.

Although the patches are provided in 10% increments in the CxF chart shown in Fig. 21, an overprint coefficient corresponding to the dot percentage between two patches which are adjacent to each other in the horizontal direction can be obtained on the basis of the colorimetric values obtained by linear interpolation.

Next, the values of $X_b$, $Y_b$, and $Z_b$ (tristimulus values of the background color) for calculating final overprint prediction values in the above Equations (1) to (3) are obtained using the CxF chart printed using the ink of spot color 1 (referred to as "spot color 1 chart" for convenience) (step S920). Specifically, the values of $X_b$, $Y_b$, and $Z_b$ are obtained by colorimetry of the patch PA95 (see Fig. 21) in the spot color 1 chart.

Next, the values of $X_f$, $Y_f$, and $Z_f$ (tristimulus values of the foreground color) for calculating the final overprint prediction values in the above Equations (1) to (3) are obtained using the spot color 2 chart (step S930). Specifically, the values of $X_f$, $Y_f$, and $Z_f$ are obtained by colorimetry of the patch PA92 (see Fig. 21) in the spot color 2 chart.

Finally, the values obtained in steps S910 to S930 are substituted into the above Equations (1) to (3), whereby the tristimulus values X, Y, and Z as overprint prediction values are calculated (step S940). This corresponds to, for example, calculating, as the value of X, the ordinate value of the straight line L91 in Fig. 23 when the abscissa indicates the product of "$X_b$ calculated in step S920" and "$X_f$ calculated in step S930".

In the above description, the values of X, $X_f$, and $X_b$ relating to the first calibration point P91 (see Fig. 23) are obtained by colorimetry of the patches PA91, PA92, and PA93 in the spot color 2 chart. However, if a highly accurate overprint prediction value is not necessary, the first calibration point P91 can be regarded as being located at the origin of the graph in Fig. 23 for simplicity. In this case, the colorimetry of the patches PA91 and PA93 in the spot color 2 chart is not necessary (the colorimetry of the patch PA92 is still necessary for obtaining the values of X and $X_f$ of the second calibration point P92). In this case, the tristimulus values X, Y, and Z as the overprint prediction values can be calculated without printing the lower patch group including the patches PA91 and PA93 in the CxF chart shown in Fig. 21. The CxF chart having the upper patch group shown in Fig. 21 without having the lower patch group is herein referred to as a "simple CxF chart" for convenience.

It should be noted that, in relation to the present invention, Japanese Laid-Open Patent Publication No. 6-281501 discloses a color value correction device for obtaining, from a color value obtained by a certain colorimetric device, a color value obtained by another colorimetric device using a neural network.

As described above, according to the Deshpande et al. method, color prediction is performed using, for example, a CxF chart as shown in Fig. 21. However, even when printing using spot colors is performed, such a CxF chart is usually not printed in advance. For this reason, it is necessary to print the same number of CxF charts as the number of the spot colors and perform colorimetry of the respective patches. This causes an increase in cost and man-hours.

Moreover, the prior art document US 2010/0091305 A1 discloses a system and a method for printing target colors with process colors utilizing parallel feedforward neural networks. In particular, according to US 2010/0091305 A1, a system for printing target colors includes a print-engine interface and a neural network component. The print-engine interface is in operative communication with a print engine of a printing system. The neural network component is calibrated to the print engine for printing a target color on a substrate. The neural network is in operative communication with the print-engine interface and communicates a parameter associated with printing the target color on the substrate utilizing the print engine.

## SUMMARY OF THE INVENTION

In view of the above, an object of the present invention is to enable prediction of a color of a patch to be included in a CxF chart so that a color obtained by overprinting inks of a plurality of colors can be predicted at lower cost and with fewer man-hours than ever before. This object is achieved by the subject-matters of the claims 1 and 15. Further advantageous embodiments of the invention are the subject-matter of the dependent claims. The invention is defined by claims 1 and 15. Aspects of the invention are set out below.

One aspect of the present invention is directed to a color prediction model construction method for constructing a color prediction model for predicting a color of a patch in a color chart including a plurality of first type patches obtained by applying an ink on a base material with ink densities of a plurality of levels, the color prediction model construction method including:

a teaching data acquisition step (S100, S200) of acquiring a plurality of pieces of teaching data including spectral characteristics of a reference patch that is a prescribed patch in the color chart and color values of a color prediction target patch in the color chart; and
a learning step (S110, S210) of performing machine learning by a neural network that takes the spectral characteristics of the reference patch as input data and takes the color values of the color prediction target patch as output data, using the plurality of pieces of teaching data.

According to such a configuration, regarding the color chart used for predicting a color obtained by overprinting inks of a plurality of colors, the relationship between the spectral characteristics of the reference patch and the color values of the color prediction target patch is learned by a neural network. Thus, a color prediction model for predicting a color of a patch to be included in the color chart is constructed. By using the constructed color prediction model, it is possible to obtain the spectral characteristics of respective patches when a color chart for color prediction target ink is assumed to be printed, without printing the color chart and performing colorimetry. From the above, it is possible to predict the color obtained by overprinting inks of a plurality of colors at lower cost and with fewer man-hours than ever before.

Another aspect of the present invention is directed to a color prediction model construction program for constructing a color prediction model for predicting a color of a patch in a color chart including a plurality of first type patches obtained by applying an ink on a base material with ink densities of a plurality of levels, the color prediction model construction program causing a computer to execute:

a teaching data reading step (S100, S200) of reading a plurality of pieces of teaching data including spectral characteristics of a reference patch that is a prescribed patch in the color chart and color values of a color prediction target patch in the color chart; and
a learning step (S110, S210) of performing machine learning by a neural network that takes the spectral characteristics of the reference patch as input data and takes the color values of the color prediction target patch as output data, using the plurality of pieces of teaching data.

These and other objects, features, modes, and advantageous effects of the present invention will become more apparent from the following detailed description of the present invention with reference to the accompanying drawings.

## BRIEF DESCRIPTION OF THE DRAWINGS

Fig. 1 is a diagram for describing terms regarding a CxF chart used herein.

Fig. 2 is a diagram showing an overall configuration of a printing system according to a first embodiment of the present invention.

Fig. 3 is a diagram showing a hardware configuration of a print data generation apparatus in the first embodiment.

Fig. 4 is a diagram for describing an overview of a color prediction process in the first embodiment.

Fig. 5 is a diagram showing an example of the structure of a neural network in the first embodiment.

Fig. 6 is a diagram for describing a process during learning using the neural network in the first embodiment.

Fig. 7 is a diagram for describing that the neural network is prepared for each color prediction target patch in the first embodiment.

Fig. 8 is a flowchart showing a procedure of the color prediction process in the first embodiment.

Fig. 9 is a flowchart showing a procedure of acquiring teaching data in the first embodiment.

Fig. 10 is a block diagram for describing details of acquisition of the teaching data in the first embodiment.

Fig. 11 is a graph showing experimental results about a first type patch regarding the first embodiment.

Fig. 12 is a graph showing experimental results about a second type patch regarding the first embodiment.

Fig. 13 is a diagram showing an example of the structure of a neural network in a first modification of the first embodiment.

Fig. 14 is a diagram showing an example of the structure of a neural network in a fourth modification of the first embodiment.

Fig. 15 is a diagram schematically showing an example of a CxF chart used in a sixth modification of the first embodiment.

Fig. 16 is a diagram for describing a tone value in a second embodiment of the present invention.

Fig. 17 is a block diagram for describing a color prediction process in the second embodiment.

Fig. 18 is a flowchart showing a procedure of the color prediction process in the second embodiment.

Fig. 19 is a flowchart showing a procedure of acquiring teaching data in the second embodiment.

Fig. 20 is a diagram for describing a Deshpande et al. method in relation to a conventional example.

Fig. 21 is a diagram schematically showing an example of a CxF chart in relation to the conventional example.

Fig. 22 is a flowchart for describing the Deshpande et al. method in relation to the conventional example.

Fig. 23 is a diagram for describing the Deshpande et al. method in relation to the conventional example.

## DETAILED DESCRIPTION OF PREFERRED EMBODIMENTS

<0. Introduction>

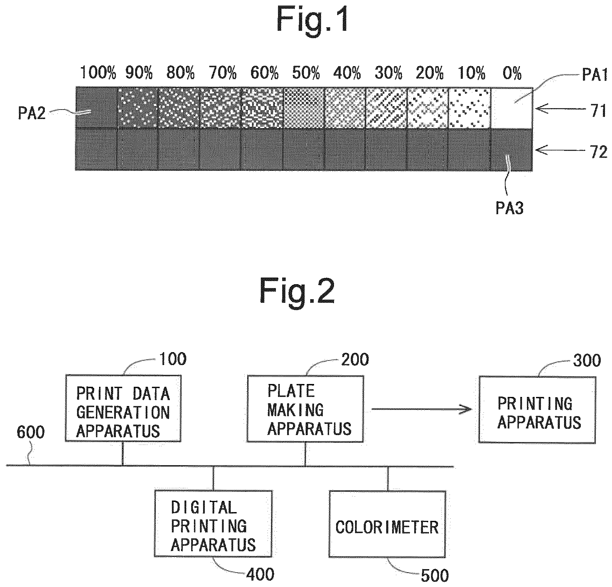

Prior to describing embodiments, the concept of the present invention will be described. It should be noted that, in the following, each of upper patches in the CxF chart (each of patches in the part denoted by reference numeral 71 in Fig. 1) (a patch obtained by printing a target ink on a base material) is referred to as a "first type patch", and each of lower patches in the CxF chart (each of patches in the part denoted by reference numeral 72 in Fig. 1) (a patch obtained by printing a target ink on black) is referred to as a "second type patch". Also, a patch representing the color of the base material itself (a patch marked with PA1 in Fig. 1) is referred to as a "paper white patch", a patch obtained by solidly applying the target ink all over the base material (at a dot percentage of 100%) (a patch marked with PA2 in Fig. 1) is referred to as a "solid patch", and a patch obtained by solidly applying only a black ink all over the base material (a patch marked with PA3 in Fig. 1) is referred to as a "black solid patch".

As described above, the colorimetry result (colorimetric value) of the CxF chart is required to predict a color obtained by overprinting a plurality of color inks including a spot color ink. In this regard, spectral reflectances which are colorimetric values can be relatively easily obtained for the solid patch PA2 and the paper white patch PA1 among 22 patches constituting the CxF chart. It should be noted that, in the following embodiments, the spectral reflectances are obtained in 10 nm increments in the wavelength range of 380 to 730 nm. However, it is not limited thereto. For example, the spectral reflectances may be obtained in increments of a unit wavelength range of an appropriate size (for example, in 10 nm increments) in the wavelength range of 400 to 700 nm. That is, one color is specified by spectral reflectances, the number of the spectral reflectances (for example, 36) is obtained by dividing the wavelength range by the unit wavelength range.

The spectral reflectances of the solid patch PA2 can be obtained, for example, by performing colorimetry of a portion of the corresponding color included in a colored ball or printed matter. Further, the spectral reflectances of the solid patch PA2 can be substituted with the spectral reflectances obtained by colorimetry of the color sample of the corresponding color. This is because the color sample represents a target color when the corresponding color is solidly applied.

The spectral reflectances of the paper white patch PA1 are obtained by colorimetry of a portion on the base material where nothing is printed. Further, as long as the same paper is used as the base material when performing printing, each of the spectral reflectances of the paper white patch PA1 is constant regardless of an ink color. Therefore, even when processing is performed for a plurality of color inks, the spectral reflectances of the paper white patch PA1 needs to be measured only once, as long as the same paper is used. Note that the configuration may be such that spectral reflectances of the paper white patches PA1 of a plurality of CxF charts are measured and the average values thereof are used as the representative values of the respective spectral reflectances of the paper white patch PA1.

Regarding 20 patches among 22 patches constituting the CxF chart except for the solid patch PA2 and the paper white patch PA1, the accurate spectral reflectances cannot be obtained unless the colorimetry of the matter actually printed on the base material or black is performed. However, focusing on a plurality of spot colors having similar colors, in regard to each of the 20 patches described above, the respective spectral reflectances for the plurality of spot colors are considered to be close to each other. As long as the same paper is used as the base material when performing printing, it is considered that the spectral reflectances of the solid patch PA2 and the spectral reflectances of each of the 20 patches have a certain relationship.

In view of the above, in a first embodiment, the above 20 patches are taken as color prediction target patches, and after the relationship between the spectral reflectances of the solid patch PA2 and the spectral reflectances of each of the color prediction target patches is learned by a neural network, the spectral reflectances of each of the color prediction target patches for color prediction target ink (ink for which the color of the patch in the CxF chart is predicted) are predicted using the learned neural network. It should be noted that, since one color is specified by, for example, 36 spectral reflectances as described above, in the following, a series of processes for predicting spectral reflectances will be referred to as a "color prediction process".

In a second embodiment, the above 20 patches are taken as color prediction target patches, and after the relationship between the spectral reflectances of the solid patch PA2 and the tone values (tone levels) of each of the color prediction target patches is learned by a neural network, the tone values of each of the color prediction target patches for the color prediction target ink are predicted using the learned neural network. Then, the tone values as prediction results are converted into spectral reflectances using a predetermined conversion equation.

Embodiments of the present invention will now be described with reference to the accompanying drawings.

<1. First Embodiment>

<1.1 Overall configuration of printing system>

Fig. 2 is a diagram showing an overall configuration of a printing system according to the first embodiment of the present invention. The printing system includes: a print data generation apparatus 100 that generates print data by performing various processes on submitted data such as a PDF file; a plate making apparatus 200 that produces a printing plate on the basis of the print data; a printing apparatus 300 that performs printing using the printing plate manufactured by the plate making apparatus 200; a digital printing apparatus 400 such as an inkjet printer or copier that performs printing on the basis of the print data which is digital data without using the printing plate; and a colorimeter 500 for measuring a color. The print data generation apparatus 100, the plate making apparatus 200, the digital printing apparatus 400, and the colorimeter 500 are communicably interconnected by a communication line 600. Note that the colorimeter 500 used in the present embodiment is a spectral colorimeter.

In the present embodiment, in the print data generation apparatus 100, a color prediction model that is a model (learning model) for predicting a color of a patch to be included in the CxF chart is constructed. By using this color prediction model, also for a spot color for which the CxF chart is not printed, color values (spectral reflectances) of each patch when the CxF chart is assumed to be printed can be obtained. The print data generation apparatus 100 also generates print data for creating a CxF chart necessary for constructing such a color prediction model. The print data generation apparatus 100 also performs an overprint prediction process for predicting a color obtained by overprinting inks of a plurality of colors (typically, a color of a portion where a plurality of spot color inks are overprinted or a portion where a spot color ink and a process color ink are overprinted). In the overprint prediction process, prediction results (predicted values of spectral reflectances) by a color prediction model are used as necessary. Furthermore, the print data generation apparatus 100 also performs a process for converting the data obtained by the overprint prediction process into print data in a format that can be printed by the digital printing apparatus 400. It should be noted that, as a specific method of the overprint prediction process, the above-described Deshpande et al. method may be employed, or another method may be employed.

<1.2 Configuration of print data generation apparatus>

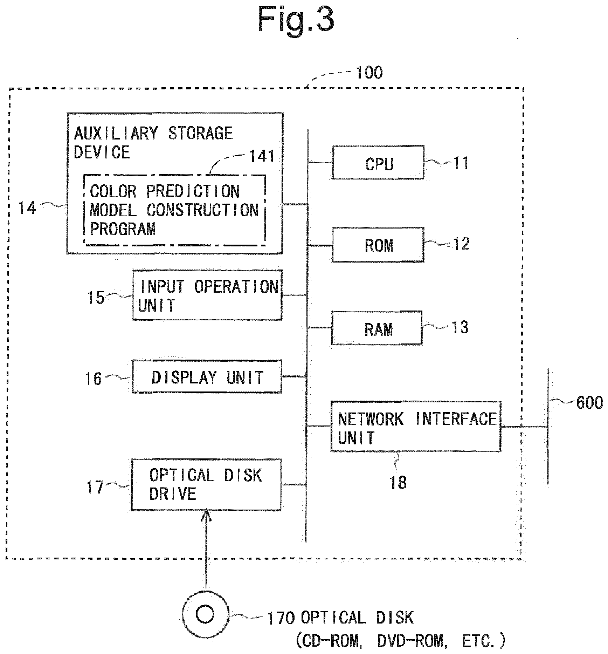

Fig. 3 is a diagram showing a hardware configuration of the print data generation apparatus 100 in the present embodiment. The print data generation apparatus 100 is implemented by a personal computer, and includes a CPU 11, a ROM 12, a RAM 13, an auxiliary storage device 14, an input operation unit 15 such as a keyboard, a display unit 16, an optical disk drive 17, and a network interface unit 18. The submitted data transmitted through the communication line 600 is inputted into the print data generation apparatus 100 via the network interface unit 18. Print data generated by the print data generation apparatus 100 is sent to the digital printing apparatus 400 through the communication line 600 via the network interface unit 18.

A program 141 for constructing the color prediction model (hereinafter referred to as a "color prediction model construction program") is stored in the auxiliary storage device 14. The color prediction model construction program 141 is provided by being stored in a computer readable recording medium such as a CD-ROM or a DVD-ROM. That is, a user purchases, for example, an optical disk (CD-ROM, DVD-ROM, etc.) 170 as a recording medium for the color prediction model construction program 141, mounts the optical disk 170 on the optical disk drive 17, reads the color prediction model construction program 141 from the optical disk 170, and installs the read program in the auxiliary storage device 14. Alternatively, the color prediction model construction program 141 sent through the communication line 600 may be received by the network interface unit 18 and installed in the auxiliary storage device 14.

It should be noted that, when the color prediction model construction program 141 is executed, an enormous amount of calculation processing is often performed. Therefore, a GPU may be provided as a processor instead of the CPU 11, or the CPU 11 and the GPU may be provided as processors.

<1.3. Color prediction process>

<1.3.1 Overview>

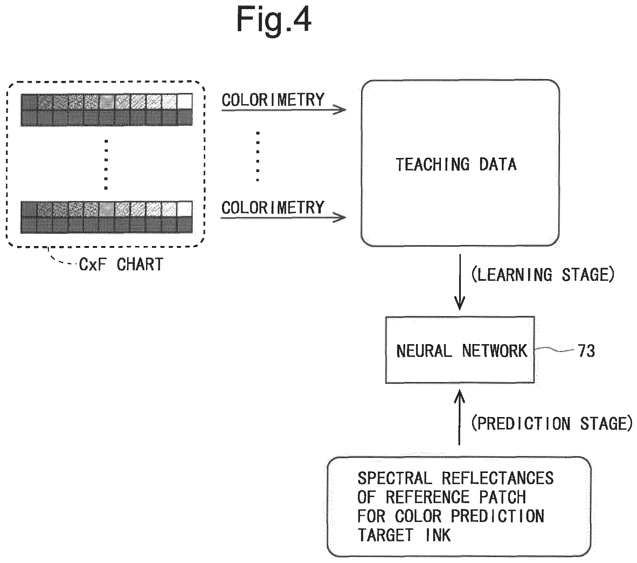

First, the overview of the color prediction process will be described with reference to Fig. 1 and Fig. 4. As described above, the spectral reflectances can be obtained relatively easily for the solid patch PA2 and the paper white patch PA1 among the 22 patches constituting the CxF chart. Further, as long as the same paper is used as the base material when performing printing, each of the spectral reflectances of the paper white patch PA1 is constant regardless of an ink color. Therefore, in the present embodiment, a color prediction model for predicting the spectral reflectances of each of the color prediction target patches (the patches excluding the solid patch PA2 and the paper white patch PA1 from the 22 patches constituting the CxF chart) on the basis of the spectral reflectances of the solid patch PA2 is constructed. Then, using the constructed color prediction model, the spectral reflectances of each of the color prediction target patches for the color prediction target ink are predicted. Note that a patch based on which the spectral reflectances of each of the color prediction target patches are predicted, such as the solid patch PA2 in the present embodiment, is referred to as a "reference patch".

In the present embodiment, the color prediction model is implemented by a neural network 73 that performs machine learning (see Fig. 4). The color prediction process is roughly classified into a learning stage process and a prediction (inference) stage process. In the learning stage, teaching data is given to the neural network 73, and machine learning using the teaching data is performed in the neural network 73. The neural network 73 is given, as teaching data, spectral reflectances obtained by colorimetry of the patches in the CxF chart. It should be noted that, in the present embodiment, one piece of teaching data is composed of 36 spectral reflectances obtained by colorimetry of the solid patch PA2 and 36 spectral reflectances obtained by colorimetry of one color prediction target patch. In the prediction stage, the spectral reflectances of the solid patch (reference patch) PA2 for the color prediction target ink are given to the learned neural network 73. As a result, the spectral reflectances (predicted values) of the color prediction target patch for the color prediction target ink are outputted from the neural network 73.

<1.3.2 Details>

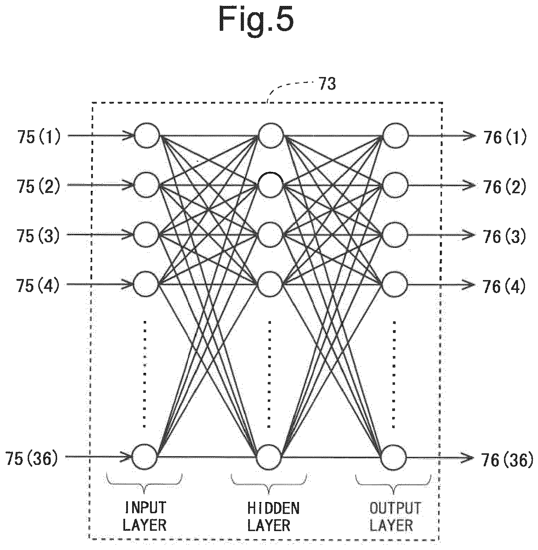

Fig. 5 is a diagram showing an example of the structure of the neural network 73 used in the present embodiment. The neural network 73 includes an input layer, a hidden layer (intermediate layer), and an output layer. The input layer is composed of 36 units (neurons) that receive 36 spectral reflectances 75(1) to 75(36). The hidden layer is also composed of 36 units. Note that the number of units in the hidden layer is not limited to 36. In addition, although the number of hidden layers is 1 in the example shown in Fig. 5, the number of hidden layers may be 2 or more. The output layer is composed of 36 units that output 36 spectral reflectances 76(1) to 76(36).

The input layer and the hidden layer are fully connected, and the hidden layer and the output layer are also fully connected. A sigmoid function is adopted as the activation function for the hidden layer and the output layer. However, a function other than the sigmoid function may be adopted as the activation function.

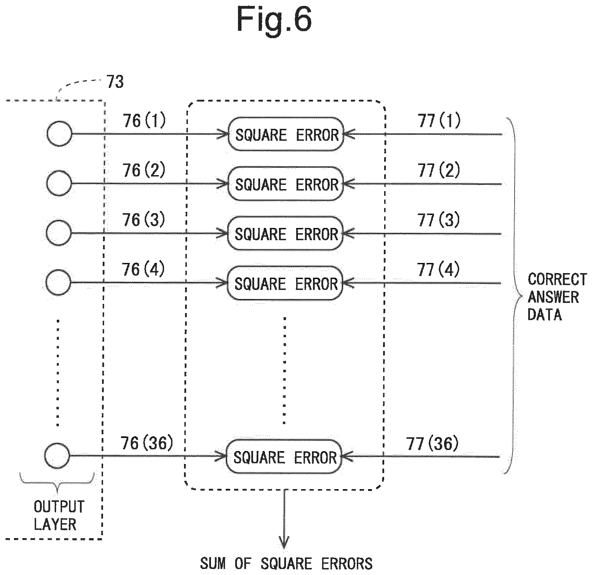

When performing learning using this neural network 73, the spectral reflectances 75(1) to 75(36) are given to the input layer. As a result, forward propagation processing is performed in the neural network 73, and the sum of square errors of the spectral reflectances 76(1) to 76(36) outputted from the output layer and the spectral reflectances 77(1) to 77(36) which are correct answer data is obtained (see Fig. 6). Then, the parameters (weighting coefficients, biases) of the neural network 73 are updated by using the gradient descent method on the basis of the result obtained by the back propagation processing of the errors. The above parameters are optimized by repeating the learning as described above. It should be noted that, as a learning method, batch learning may be used in which all pieces of teaching data are given to the neural network 73 in a collective manner, mini-batch learning may be used in which teaching data is divided into a plurality of group, and the teaching data is given to the neural network 73 for each group, or online learning may be used in which teaching data is given to the neural network 73 one by one.

When performing prediction (inference) using this neural network 73, the spectral reflectances 75(1) to 75(36) of the solid patch PA2 for the color prediction target ink are given to the input layer. Then, the spectral reflectances 76(1) to 76(36) outputted from the output layer by the forward propagation processing in the neural network 73 are treated as the predicted values of the spectral reflectances of the color prediction target patch for the color prediction target ink.

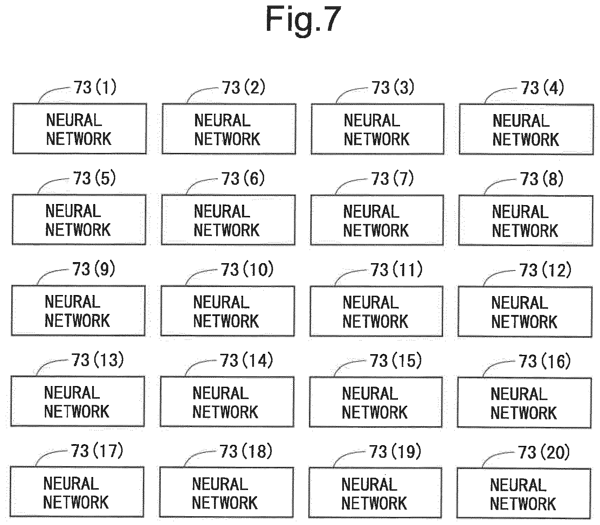

Meanwhile, the neural network 73 shown in Fig. 5 is prepared for each color prediction target patch. In the present embodiment, since 20 patches are taken as color prediction target patches, 20 neural networks 73(1) to 73(20) are prepared as shown in Fig. 7. Then, learning and prediction (inference) are performed for each color prediction target patch using the corresponding neural network 73.

<1.3.3 Processing procedure>

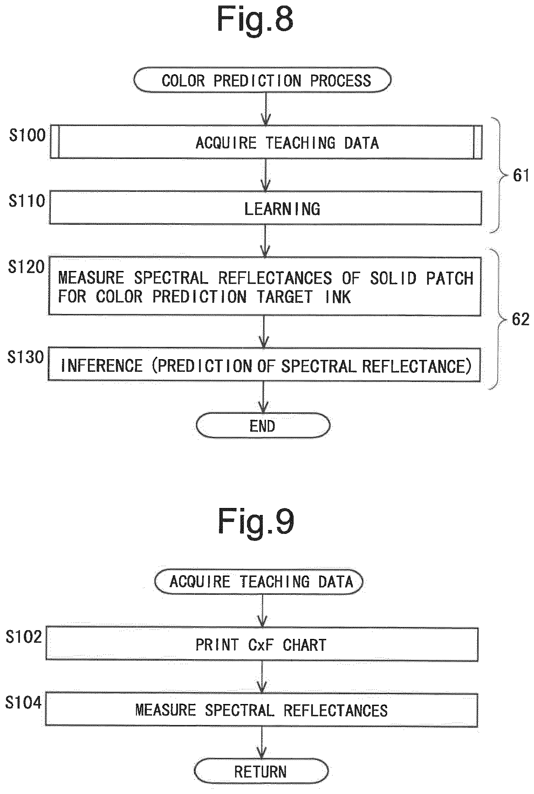

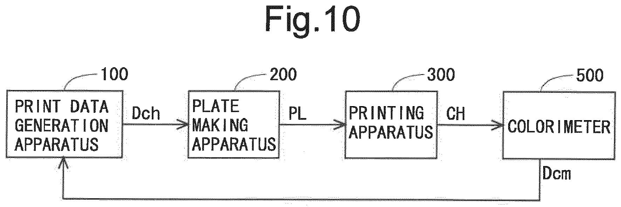

Next, the procedure of the color prediction process will be described with reference to the flowcharts shown in Fig. 8 and Fig. 9. As shown in Fig. 8, first, a process of acquiring teaching data necessary for learning in the neural network 73 to be constructed as a color prediction model is performed (step S100). In the step S100, it is preferable to acquire a sufficient number of teaching data pieces so that spectral reflectances are accurately predicted. Specifically, as shown in Fig. 9, the step S100 includes a step of printing a CxF chart (step S102) and a step of measuring spectral reflectances (step S104). The processes in the step S102 and the step S104 will be described in detail with reference to Fig. 10.

In the step S102, first, print data Dch for outputting the CxF chart is created by the print data generation apparatus 100, and the print data Dch is sent to the plate making apparatus 200. The plate making apparatus 200 produces a printing plate PL on the basis of the print data Dch. Then, the printing apparatus 300 performs printing using the printing plate PL. Thus, the CxF chart CH is outputted from the printing apparatus 300.

In the step S104, the colorimeter 500 performs colorimetry of the patches included in the CxF chart CH printed in the step S102. Colorimetric data Dcm obtained by the colorimetry by the colorimeter 500 is sent to the print data generation apparatus 100. As described above, the colorimeter 500 used in the present embodiment is a spectral colorimeter. Therefore, the colorimetric data Dcm obtained by the colorimetry is spectral reflectance data. In the present embodiment, spectral reflectance data is obtained in 10 nm increments in the wavelength range of 380 to 730 nm. Accordingly, 36 pieces of spectral reflectance data are obtained by performing the colorimetry of any one of the patches in the CxF chart CH.

After acquiring the teaching data, machine learning using the teaching data obtained in the step S100 is performed by the neural network 73 (step S110). As described above, in the present embodiment, this machine learning is performed using the corresponding neural network 73 for each color prediction target patch. By machine learning in the step S110, the parameters (weighting coefficients, biases) of the neural network 73 are optimized. The neural network 73 having the optimized parameters serves as a color prediction model used for color prediction. In this manner, in the step S110, a color prediction model for predicting the color of a patch in the CxF chart is constructed.

Note that the processes in the step S100 and the step S110 (the processes marked with reference numeral 61 in Fig. 8) need to be performed only once, and do not need to be performed for each process for one color prediction target ink. On the other hand, the processes in the step S120 and the step S130 (the processes marked with reference numeral 62 in Fig. 8) need to be performed for each process for one color prediction target ink.

In the step S120, the spectral reflectances of the solid patch PA2 for the color prediction target ink are measured using the colorimeter 500. As described above, the spectral reflectances of the solid patch can be obtained, for example, by performing colorimetry of a portion of the corresponding color included in a colored ball or printed matter. Further, the spectral reflectances of the solid patch can be substituted with the spectral reflectances of the color sample of the corresponding color.

Next, the spectral reflectances (predicted values) of the color prediction target patch for the color prediction target ink are obtained by giving, as input data, the spectral reflectances obtained in the step S120 to the neural network 73 serving as the color prediction model constructed in the step S110 (step S130). In the step S130, 36 spectral reflectances are obtained for each of the 20 color prediction target patches. Meanwhile, the spectral reflectances of the solid patch PA2 have been obtained in the step S120. Further, regarding the spectral reflectances of the paper white patch PA1, past measured values can be used as long as the same paper is used. Thus, even if the CxF chart for the color prediction target ink is not actually printed, the spectral reflectances of all patches when the CxF chart is assumed to be printed can be obtained.

It should be noted that, in the present embodiment, a teaching data acquisition step is implemented by the step S100, a learning step is implemented by the step S110, a second spectral characteristic measurement step is implemented by the step S120, and a spectral characteristic prediction step is implemented by the step S130. In addition, a color chart printing step is implemented by the step S102, and a first spectral characteristic measurement step is implemented by the step S104.

<1.4 Experimental result>

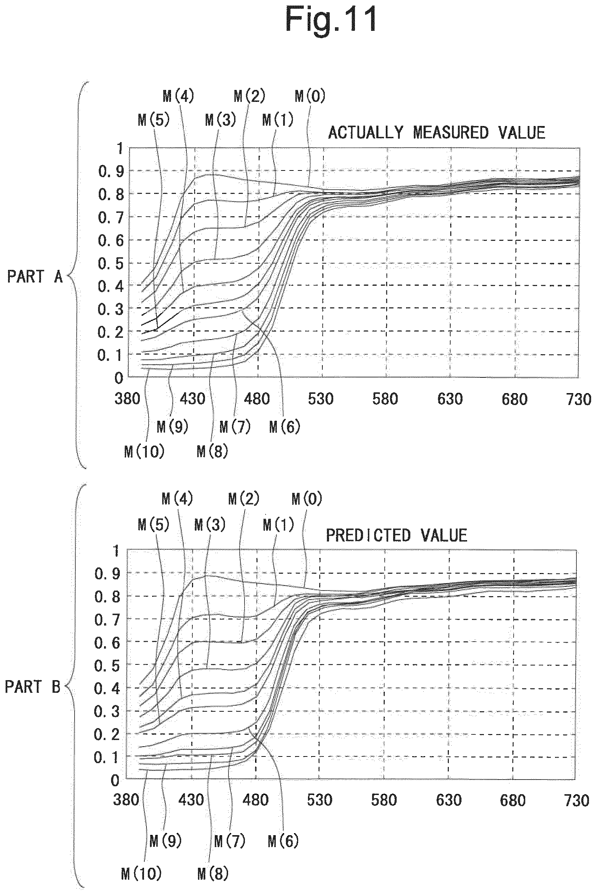

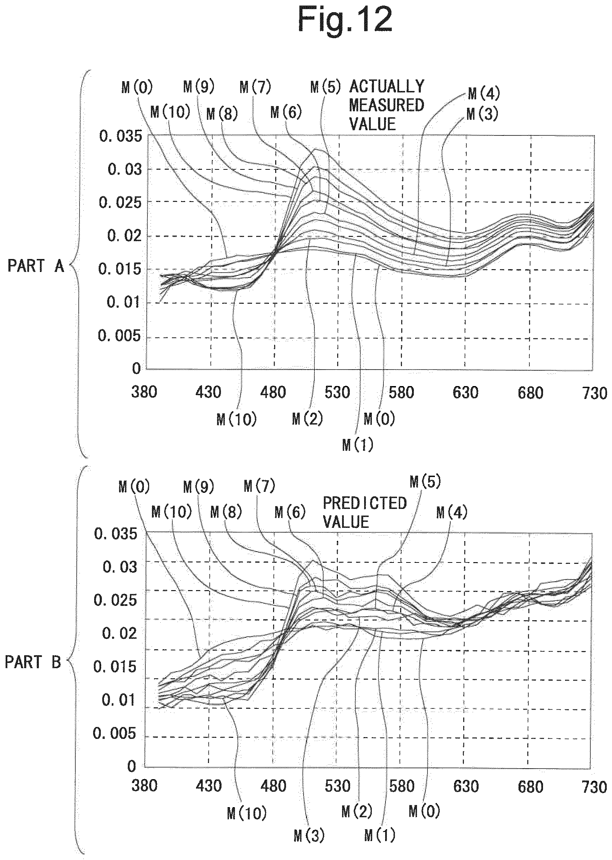

An experimental result of spectral reflectance prediction using the neural network 73 will be described. Fig. 11 is a graph showing experimental results for the first type patches 71. Fig. 12 is a graph showing experimental results for the second type patches 72. In Fig. 11 and Fig. 12, part A represents actually measured values of reflectances at respective wavelengths by a solid lines for respective patches, and part B represents predicted reflectance values of reflectances at respective wavelengths by solid lines for respective patches. In each graph, the horizontal axis represents wavelength (unit: nm), and the vertical axis represents reflectance. It should be noted that, in Fig. 11 and Fig. 12, the correspondence relationship between reference signs and dot percentages of the spot color in the CxF chart is as follows: "M(0): 0%, M(1): 10%, M(2): 20%, M(3): 30%, M(4): 40%, M(5): 50%, M(6): 60%, M(7): 70%, M(8): 80%, M(9 ): 90%, and M(10): 100%".

It can be seen from Fig. 11 that, for the first type patches 71, the prediction is performed with sufficient accuracy as a whole, although the prediction accuracy for halftone is slightly low. It should be noted that the spectral reflectance of each of the halftone patches can also be obtained by performing interpolation calculation on the basis of the spectral reflectance of the paper white patch PA1 and the spectral reflectance of the solid patch PA2.

With regard to the second type patches 72, focusing on the part A of Fig. 12, the reflectance is higher as the density of the spot color is lower in the wavelength region of about 480 nm or less, whereas the reflectance is higher as the density of the spot color is higher in the wavelength region of about 480 nm or more. Originally, the reflectance generally decreases as inks are more overlaid. However, in the wavelength region of about 480 nm or more, the reflectance increases as inks are more overlaid. This is presumably because an opaque component is present in the spot color ink and light is reflected at the opaque portion. As shown in part B of Fig. 12, such a reversal phenomenon of reflectance with the wavelength of about 480 nm as a boundary occurs also in regard to the predicted values. That is, it is understood that the neural network 73 predicts the spectral reflectance in consideration of the influence of the above opaque component.

Further, according to the experiment, regarding the second type patches 72, the color difference (that is, the prediction error) between the actually measured value and the predicted value is around 5 regardless of the density of the spot color. It should be noted that the color difference is obtained as follows. First, tristimulus values X, Y, and Z are obtained for each of the actually measured value and the predicted value from the spectral reflectance using a predetermined equation. Next, for each of the actually measured value and the predicted value, Lab values ("L value", "a value", and "b value") are obtained from the tristimulus values X, Y, and Z by a predetermined conversion equation. Next, for each of "L value", "a value", and "b value", the difference between the actually measured value and the predicted value is obtained. The value (positive value) of the square root of the sum of squares of the three differences obtained in this manner is the color difference. It is supposed here that the spectral reflectances of all the second type patches 72 are substituted with the spectral reflectances of the black solid patch PA3, on the assumption that the spectral reflectances of the black solid patch PA3 can be obtained. In this case, the patch having a higher density of the spot color has a greater color difference. At the patch in which a dot percentage of the spot color is 100 % among the second type patches 72, the color difference is about 13. Since the color difference is about 5 regardless of the density of the spot color in a case in which the prediction is performed using the neural network 73 according to the present embodiment, the superiority of the method of the present embodiment can be understood.

<1.5 Effect>

According to the present embodiment, regarding the CxF chart (see Fig. 1) used for predicting a color obtained by overprinting inks of a plurality of colors, patches other than the solid patch PA2 and the paper white patch PA1 are taken as color prediction target patches, and the relationship between the spectral reflectances of the solid patch PA2 and the spectral reflectances of each of the color prediction target patches is learned by the neural network 73. Thus, a color prediction model for predicting a color of the patch to be included in the CxF chart is constructed. Then, by using the constructed color prediction model, the spectral reflectances (predicted values) of each of the color prediction target patches for the color prediction target ink are obtained. That is, the spectral reflectances of respective patches when the CxF chart is assumed to be printed can be obtained without printing the CxF chart for the color prediction target ink. Therefore, printing of the CxF chart and colorimetry thereof are not necessary. From the above, it is possible to predict the color obtained by overprinting inks of a plurality of colors at lower cost and with fewer man-hours than ever before.

<1.6. Modification>

Modifications of the first embodiment will now be described.

<1.6.1 First Modification>

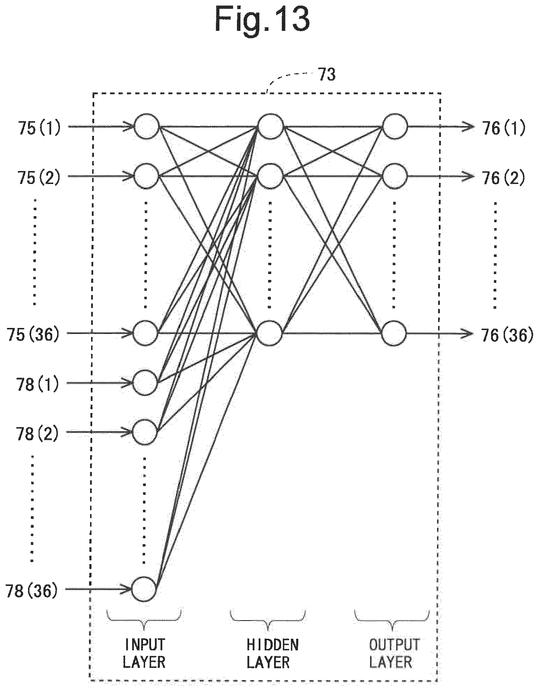

In the first embodiment, the spectral reflectances of the color prediction target patch are predicted on the basis of the spectral reflectances of the solid patch PA2. However, the present invention is not limited thereto, and the spectral reflectances of the color prediction target patch may be predicted on the basis of the spectral reflectances of the solid patch PA2 and the spectral reflectances of the paper white patch PA1. In this case, the neural network 73 has a structure shown in Fig. 13, for example. As shown in Fig. 13, an input layer is composed of 72 units that receive 36 spectral reflectances 75(1) to 75(36) of the solid patch PA2 and 36 spectral reflectances 78(1) to 78(36) of the paper white patch PA1. A hidden layer is composed of, for example, 36 units. As in the first embodiment, an output layer is composed of 36 units that output 36 spectral reflectances 76(1) to 76(36) of the color prediction target patch. When performing learning and when performing prediction, the spectral reflectances 78(1) to 78(36) of the paper white patch PA1 as well as the spectral reflectances 75(1) to 75(36) of the solid patch PA2 are given to the neural network 73 as input data.

According to this modification, learning by the neural network 73 is performed taking the characteristics of the base material (printing paper) used for printing into account. Therefore, the spectral reflectances when printing is performed on the corresponding base material can be predicted with higher accuracy.

<1.6.2 Second Modification>

The spectral reflectances of the color prediction target patch may be predicted on the basis of the spectral reflectances of the solid patch PA2 and the spectral reflectances of the black solid patch PA3. In this case, a neural network 73 having the same structure as that of the first modification is used, and when performing learning and when performing prediction, 36 spectral reflectances of the solid patch PA2 and 36 spectral reflectances of the black solid patch PA3 are given to the neural network 73 as input data.

According to this modification, learning by the neural network 73 is performed taking the spectral reflectances of the black solid patch PA3 into account. Therefore, the spectral reflectances of each of the second type patches 72, in particular, can be predicted with higher accuracy.

<1.6.3 Third Modification>

In the first embodiment, the neural network 73 is directly given the spectral reflectance values as input data. However, the present invention is not limited thereto. The configuration may be such that measured values of spectral reflectances are subjected to normalization with the spectral reflectance of the paper white patch PA1 being 1 and the values obtained by normalization are given to the neural network 73 as input data.

According to this modification, since the data normalized with the spectral reflectances of the paper white patch PA1 being references is given to the neural network 73, learning is performed by taking the characteristics of the base material (printing paper) used for printing into account. Therefore, as in the first modification, the spectral reflectances when printing is performed on the corresponding base material can be predicted with higher accuracy.

<1.6.4 Fourth Modification>

In the first embodiment, the same number of neural networks 73 as the number of the color prediction target patches are prepared, and learning and prediction (inference) are performed for each color prediction target patch using the corresponding neural network 73. However, the present invention is not limited thereto. The configuration may be such that all the color prediction target patches are processed by one neural network 73.

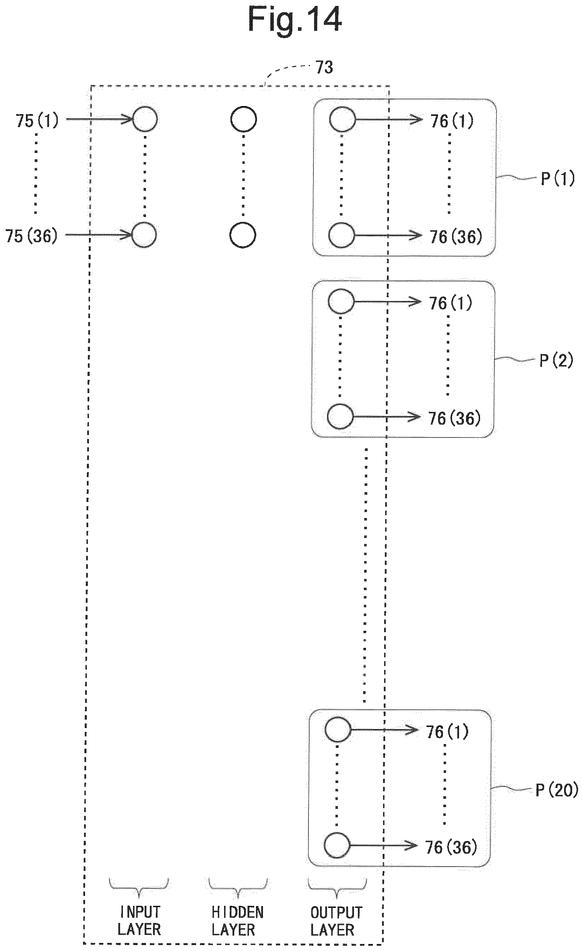

Fig. 14 is a diagram showing an example of the structure of a neural network 73 in this modification. It should be noted that, in Fig. 14, lines indicating connection between two layers are not illustrated. An input layer and a hidden layer are fully connected, and the hidden layer and an output layer are also fully connected. The input layer and the hidden layer have the same structure as that of the first embodiment. The output layer is configured to output 36 spectral reflectances 76(1) to 76(36) of all the color prediction target patches. That is, in the output layer, 36 units that output 36 spectral reflectances 76(1) to 76(36) are provided for each of the 20 color prediction target patches P(1) to P(20).

In this modification, unlike the first embodiment, the network between the input layer and the hidden layer is shared by all color prediction target patches. Thus, the overall processing speed is increased as compared with the first embodiment.

<1.6.5 Fifth Modification>

In the first embodiment, the spectral reflectances of the color prediction target patch are predicted on the basis of the spectral reflectances of the solid patch PA2. That is, the spectral reflectances are predicted using the solid patch PA2 as a reference patch. However, the present invention is not limited thereto, and the configuration may be such that, on the basis of the spectral reflectances of a halftone patch, the spectral reflectances of the other patches (color prediction target patches) are predicted. For example, the present invention can also be configured such that the relationship between the spectral reflectances of the patch in which a dot percentage of the spot color is 50% among the first type patches 71 and the spectral reflectances of the other patches is learned by the neural network 73, and by giving the spectral reflectances in the state in which the color prediction target ink is applied at a dot percentage of 50% on the base material to the learned neural network 73, the spectral reflectances (predicted values) of the color prediction target patch for the color prediction target ink are obtained. In this way, the spectral reflectances may be predicted using a halftone patch as a reference patch.

<1.6.6 Sixth Modification>

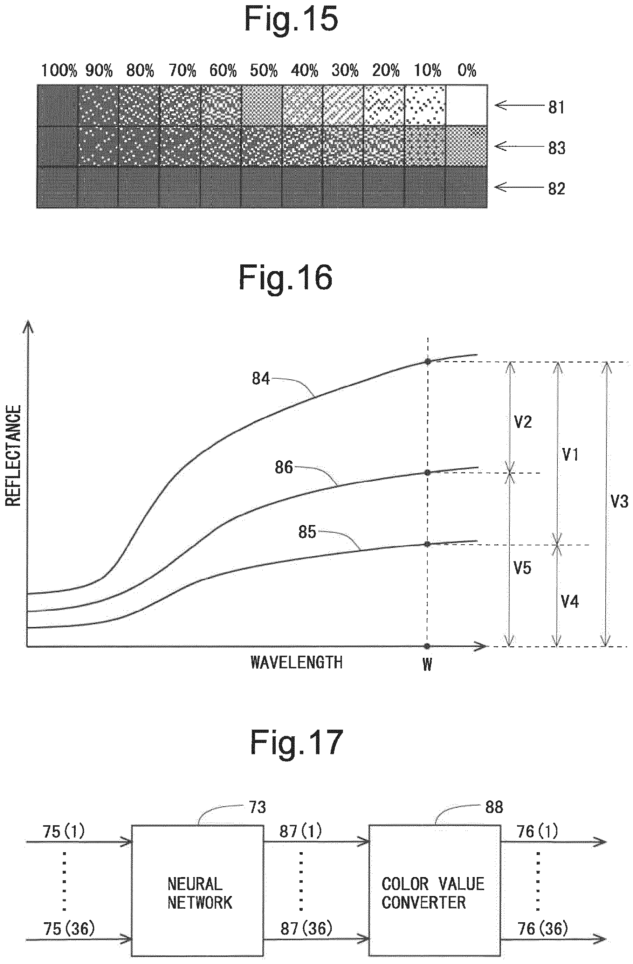

The first embodiment describes an example in which the CxF chart including the first type patches 71 and the second type patches 72 is used. However, a CxF chart having three parts as schematically shown in Fig. 15 may be used. Each of the patches in the part denoted by reference numeral 81 in Fig. 15 is a first type patch. Each of the patches in the part denoted by reference numeral 82 in Fig. 15 is a second type patch. Each of the patches in the part denoted by reference numeral 83 in Fig. 15 is a patch (hereinafter referred to as a "third type patch") obtained by printing a target ink on black at a dot percentage of 500.
If learning can be performed in advance by the neural network 73 using the teaching data including the spectral reflectances of the third type patches 83 described above, the spectral reflectances of each of the third type patches 83 for the color prediction target ink can also be predicted by the learned neural network 73.

<2. Second Embodiment>

The second embodiment of the present invention will be described. Note that the description will mainly focus on the differences from the first embodiment.

<2.1 Overview>

In the first embodiment, in order to predict the spectral reflectances of the color prediction target patch for the color prediction target ink, the relationship between the spectral reflectances of the solid patch PA2 (see Fig. 1) and the spectral reflectances of the color prediction target patch is learned in advance by the neural network 73. In contrast, in the present embodiment, in order to predict the spectral reflectances of the color prediction target patch for the color prediction target ink, the relationship between the spectral reflectances of the solid patch PA2 and the tone values (tone levels) of the color prediction target patch is learned in advance by the neural network 73. That is, the tone values are outputted from an output layer of the neural network 73. When the spectral reflectances are predicted, the tone values (predicted values) of the color prediction target patch are obtained by giving the spectral reflectances of the solid patch PA2 for the color prediction target ink to the learned neural network 73. Then, the spectral reflectances are calculated from the tone values on the basis of a predetermined conversion equation.
Hereinafter, the color prediction process according to the present embodiment will be described. Note that the overall configuration of a printing system and the configuration of a print data generation apparatus 100 are the same as those in the first embodiment (see Fig. 2 and Fig. 3).

<2.2 Color prediction process>

As described above, in the present embodiment, tone values are predicted using the neural network 73. Thus, first, the tone values will be described with reference to Fig. 16. In the graph shown in Fig. 16, the horizontal axis represents wavelength, and the vertical axis represents reflectance. A curve denoted by reference numeral 84 represents the reflectances at respective wavelengths regarding the color of the base material itself (paper white). A curve denoted by reference numeral 85 represents the reflectances at respective wavelengths in a state in which a certain ink is solidly applied on the base material (at a dot percentage of 100%). A curve denoted by reference numeral 86 represents the reflectances at respective wavelengths in a state in which the certain ink is applied on the base material at a certain dot percentage (here, at a dot percentage of Q%). In this case, the tone value TV at the wavelength W in a state in which the certain ink is applied on the base material at a dot percentage of Q% is expressed by the following Equation (4) (see

Fig. 16).

$$TV = V2/V1$$

$$= (V3 - V5)/(V3 - V4) \ldots(4)$$

From the above Equation (4), the following Equation (5) is established. That is, when the tone value TV has been obtained, the reflectance V5 at the wavelength W in a state in which the above-mentioned certain ink is applied on the base material at a dot percentage of Q% can be obtained by the following Equation (5).

$$V5 = V3 - TV(V3 - V4) \ldots(5)$$

In the present embodiment, when performing prediction (inference) using the neural network 73, tone values 87(1) to 87(36) of the color prediction target patch for the color prediction target ink are outputted from the neural network 73 as shown in Fig. 17. A color value converter 88 for converting the tone values 87(1) to 87(36) into spectral reflectances 76(1) to 76(36) is provided as shown in Fig. 17. The color value converter 88 converts the tone values 87(1) to 87(36) into spectral reflectances 76(1) to 76(36) using the above Equation (5). At that time, the spectral reflectance of the paper white patch is substituted for V3 in the above Equation (5), and the spectral reflectance of the solid patch is substituted for V4 in the above Equation (5).

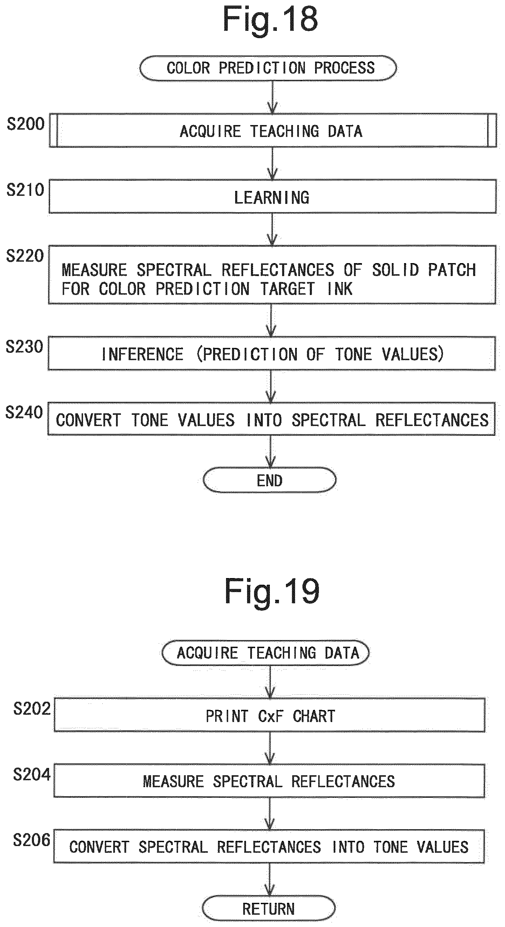

The procedure of the color prediction process according to the present embodiment will be described with reference to the flowcharts shown in Fig. 18 and Fig. 19. First, a process of acquiring teaching data necessary for learning by the neural network 73 is performed (step S200).

As shown in Fig. 19, the step S200 includes a step of printing a CxF chart (step S202), a step of measuring spectral reflectances (step S204), and a step of converting spectral reflectances into tone values (step S206). In the step S202, the CxF chart is printed in the same manner as in the first embodiment. In the step S204, the spectral reflectances are measured in the same manner as in the first embodiment. In the step S206, a process for converting the spectral reflectances obtained in the step S204 into tone values is performed using the above Equation (4). The reason why such processing is performed is because, in the present embodiment, one piece of teaching data is composed of 36 spectral reflectances obtained by colorimetry of the solid patch PA2 and 36 tone values corresponding to 36 spectral reflectances obtained by colorimetry of one color prediction target patch.

After acquiring the teaching data, machine learning using the teaching data obtained in the step S200 is performed by the neural network 73 (step S210). Thus, the parameters (weighting coefficients, biases) of the neural network 73 are optimized, and a color prediction model for predicting a color of the patch in the CxF chart is constructed.

In the step S220, spectral reflectances of the solid patch PA2 for the color prediction target ink are measured using the colorimeter 500 as in the first embodiment. Then, tone values (predicted values) of the color prediction target patch for the color prediction target ink are obtained by giving, as input data, the spectral reflectances obtained in the step S220 to the neural network 73 serving as the color prediction model constructed in the step S210 (step S230). In the step S230, 36 tone values are obtained for each of the 20 color prediction target patches. Finally, spectral reflectances are calculated from the tone values obtained in the step S230 on the basis of the above Equation (5) (step S240).

It should be noted that, in the present embodiment, a teaching data acquisition step is implemented by the step S200, a learning step is implemented by the step S210, a second spectral characteristic measurement step is implemented by step the S220, a tone level prediction step is implemented by step the S230, and a spectral characteristic calculation step is implemented by the step S240. In addition, a color chart printing step is implemented by the step S202, a first spectral characteristic measurement step is implemented by the step S204, and a color value conversion step is implemented by the step S206.

<2.3 Effect>

Similar to the first embodiment, according to the present embodiment, it is possible to predict the color obtained by overprinting inks of a plurality of colors at lower cost and with fewer man-hours than ever before.

<3. Other Modifications>

In each of the above-described embodiments, the color prediction model is constructed after spectral reflectances are obtained by colorimetry of the patches in the color chart by the colorimeter 500. However, a color prediction model can also be constructed on the basis of measured values other than spectral reflectances. For example, a color prediction model can also be constructed on the basis of spectral absorption factors (values each obtained by subtracting the spectral reflectance from 1) or spectral absorption coefficients $\alpha$ each obtained from the following Equation (6). Note that measured values such as spectral reflectances, spectral absorption factors, and spectral absorption coefficients correspond to "spectral characteristics". When the reflectance of paper white at a certain wavelength is $R_0$, the reflectance of the corresponding patch is R, and the thickness of the ink is x, the spectral absorption coefficient $\alpha$ is expressed by the following Equation (6) when multiple reflection is not considered.

$$\alpha = -(1/(2x)) \cdot \ln(R/R_0) \ \ldots(6)$$

Further, a color prediction model is constructed using the CxF chart shown in Fig. 1 (CxF chart including the first type patch 71 and the second type patch 72) in the first embodiment (including modifications other than the sixth modification) and the second embodiment, and a color prediction model is constructed using the CxF chart shown in Fig. 15 (CxF chart including the first type patch 81, the second type patch 82, and the third type patch 83) in the sixth modification of the first embodiment. However, it is also possible to construct a color prediction model using a "simple CxF chart" including only the first type patch.

<4. Others>

The present invention is not limited to the above-described embodiments (including modifications), and various modifications can be made as long as the modifications are covered by the scope of the claims.

**Claims**

1. A color prediction model construction method for constructing a color prediction model for predicting a color of a patch in a color chart including a plurality of first type patches (71) obtained by applying an ink on a base material with ink densities of a plurality of levels, the color prediction model construction method comprising:

   a teaching data acquisition step (S100, S200) of acquiring a plurality of pieces of teaching data including spectral characteristics of a reference patch (PA2) that is a prescribed patch in the color chart and color values of a color prediction target patch in the color chart, the color prediction target patch being at least one patch among patches in the color chart excluding patches having a maximum ink density or a minimum ink density among the plurality of first type patches; and

   a learning step (S110, S210) of performing machine learning by a neural network (73) that takes the spectral characteristics of the reference patch (PA2) as input data and takes the color values of the color prediction target patch as output data, using the plurality of pieces of teaching data.

2. The color prediction model construction method according to claim 1, wherein the reference patch (PA2) is a patch having a maximum ink density among the plurality of first type patches (71).

3. The color prediction model construction method according to claim 1, wherein the reference patch (PA2) includes a patch having a maximum ink density among the plurality of first type patches (71) and a patch having a minimum ink density among the plurality of first type patches (71).

4. The color prediction model construction method according to any one of claims 1 to 3, wherein

   the color prediction target patch includes N patches,
   N pieces of neural networks (73(1)-73(20)) are prepared in one-to-one correspondence with the N patches, and
   in the learning step (S110, S210), machine learning is performed for each neural network (73(1)-73(20)), using color values of a corresponding patch and the spectral characteristics of the reference patch (PA2).

5. The color prediction model construction method according to any one of claims 1 to 3, wherein

   the color prediction target patch includes N patches,
   only one piece of neutral network (73) that takes the spectral characteristics of the reference patch (PA2) as input data and takes color values of the N patches as output data is prepared, and
   in the learning step (S110, S210), machine learning is performed by the only one piece of the neural network (73), using the spectral characteristics of the reference patch (PA2) and the color values of the N patches.

6. The color prediction model construction method according to any one of claims 1 to 5, wherein

a color of each patch in the color chart is specified by K spectral characteristics,
the neural network (73) includes an input layer, a hidden layer, and an output layer,
the hidden layer being an intermediate layer between the input layer and the output layer, and being connected to the input layer and to the output layer such that the input layer is connected to the output layer via the hidden layer,
the input layer includes K units for one patch serving as the reference patch (PA2), and
the output layer includes K units for one patch serving as the color prediction target patch.

7. The color prediction model construction method according to claim 6, wherein the K spectral characteristics are spectral reflectances, the number of the spectral reflectances being obtained by dividing a wavelength range from 400 nm to 700 nm by a unit wavelength range of an appropriate size.

8. The color prediction model construction method according to any one of claims 1 to 6, wherein the spectral characteristics are any one of spectral reflectances, spectral absorption factors, and spectral absorption coefficients.

9. The color prediction model construction method according to any one of claims 1 to 8, wherein the color values are the spectral characteristics.

10. The color prediction model construction method according to claim 9, wherein the teaching data acquisition step (S100) includes:

a color chart printing step (S102) of printing the color chart for generating each piece of teaching data; and
a first spectral characteristic measurement step (S104) of measuring the spectral characteristics of the reference patch (PA2) and the spectral characteristics of the color prediction target patch for the color chart printed in the color chart printing step.

11. The color prediction model construction method according to any one of claims 1 to 8, wherein the color values are tone levels.

12. The color prediction model construction method according to claim 11, wherein the teaching data acquisition step (S200) includes:

a color chart printing step (S202) of printing the color chart for generating each piece of teaching data;
a first spectral characteristic measurement step (S204) of measuring the spectral characteristics of the reference patch (PA2) and the spectral characteristics of the color prediction target patch for the color chart printed in the color chart printing step; and
a color value conversion step (S206) of converting the spectral characteristics of the color prediction target patch measured in the first spectral characteristic measurement step into the tone levels.

13. The color prediction model construction method according to any one of claims 1 to 12, wherein the color chart further includes a plurality of second type patches (72) obtained by applying the ink on a black ink with ink densities of the plurality of levels.

14. The color prediction model construction method according to claim 1, wherein

the color chart further includes a plurality of second type patches (72) obtained by applying the ink on a black ink with ink densities of the plurality of levels, and
the reference patch (PA2) includes a patch having a maximum ink density among the plurality of first type patches (71), and a patch having a minimum ink density among the plurality of second type patches (72).

15. A color prediction model construction program for constructing a color prediction model for predicting a color of a patch in a color chart including a plurality of first type patches (71) obtained by applying an ink on a base material with ink densities of a plurality of levels, the color prediction model construction program causing, when executed on a computer, said computer to execute the method according to one of claims 1 to 14.

**Patentansprüche**

1. Verfahren zur Erstellung eines Farbvorhersagemodells zum Erstellen eines Farbvorhersagemodells zum Vorhersagen einer Farbe einer Stelle in einer Farbkarte, die eine Vielzahl von Stellen (71) eines ersten Typs umfasst, die durch Auftragen einer Tinte auf ein Basismaterial mit Tintendichten einer Vielzahl von Niveaus erhalten werden, wobei das Verfahren zur Erstellung eines Farbvorhersagemodells umfasst:

   einen Lehrdatenerfassungsschritt (S100, S200) des Erfassens einer Vielzahl von Teilen von Lehrdaten, die spektrale Eigenschaften einer Referenzstelle (PA2), die eine vorgegebene Stelle in der Farbkarte ist, und Farbwerte einer Farbvorhersagezielstelle in der Farbkarte umfassen, wobei die Farbvorhersagezielstelle zumindest eine Stelle unter den Stellen in der Farbkarte ist, die Stellen mit einer maximalen Farbdichte oder einer minimalen Farbdichte unter der Vielzahl von Stellen des ersten Typs ausschließt; und
   einen Lernschritt (S110, S210) des Durchführens von maschinellem Lernen durch ein neuronales Netzwerk (73), das die spektralen Eigenschaften der Referenzstelle (PA2) als Eingabedaten verwendet und die Farbwerte der Farbvorhersagezielstelle als Ausgabedaten verwendet, wobei die Vielzahl von Teilen als Lehrdaten verwendet werden.

2. Verfahren zur Erstellung eines Farbvorhersagemodells nach Anspruch 1, wobei die Referenzstelle (PA2) eine Stelle mit einer maximalen Farbdichte unter der Vielzahl von Stellen (71) des ersten Typs ist.

3. Verfahren zur Erstellung eines Farbvorhersagemodells nach Anspruch 1, wobei die Referenzstelle (PA2) eine Stelle mit einer maximalen Farbdichte unter der Vielzahl von Stellen (71) des ersten Typs und eine Stelle mit einer minimalen Farbdichte unter der Vielzahl von Stellen (71) des ersten Typs umfasst.

4. Verfahren zur Erstellung eines Farbvorhersagemodells nach einem der Ansprüche 1 bis 3, wobei

   die Farbvorhersagezielstelle N Stellen umfasst,
   N Teile des neuronalen Netzes (73(1)-73(20) in einszu-eins-Entsprechung mit den N Stellen vorbereitet werden, und
   in dem Lernschritt (S110, S210) für jedes neuronale Netz (73(1)-73(20)) maschinelles Lernen durchgeführt wird, wobei Farbwerte einer entsprechenden Stelle und die spektralen Eigenschaften der Referenzstelle (PA2) verwendet werden.

5. Verfahren zur Erstellung eines Farbvorhersagemodells nach einem der Ansprüche 1 bis 3, wobei

   die Farbvorhersagezielstelle N Stellen umfasst,
   lediglich ein Teil des neutralen Netzes (73) vorbereitet wird, das die spektralen Eigenschaften der Referenzstelle (PA2) als Eingabedaten und die Farbwerte der N Stellen als Ausgabedaten verwendet, und
   in dem Lernschritt (S110, S210) das maschinelle Lernen von einem einzigen Teil des neuronalen Netzes (73) durchgeführt wird, wobei die spektralen Eigenschaften der Referenzstellen (PA2) und die Farbwerte der N Stellen verwendet werden.

6. Verfahren zur Erstellung eines Farbvorhersagemodells nach einem der Ansprüche 1 bis 5, wobei

   die Farbe jeder Stelle in der Farbkarte durch die K-Spektraleigenschaften bestimmt wird,
   das neuronale Netz (73) eine Eingabeebene, eine versteckte Ebene und eine Ausgabeebene umfasst,
   wobei die verstecke Ebene eine Zwischenebene zwischen der Eingabeebene und der Ausgabeebene ist und mit der Eingabeebene und der Ausgabeebene derart verbunden ist, dass die Eingabeebene über die versteckte Ebene mit der Ausgabeebene verbunden ist,
   die Eingabeebene K Einheiten für eine Stelle, die als Referenzstelle (PA2) dient, umfasst und
   die Ausgabeebene K Einheiten für eine Stelle, das als Farbvorhersagezielstelle dient, umfasst.

7. Verfahren zur Erstellung eines Farbvorhersagemodells nach Anspruch 6, wobei die K-Spektraleigenschaften spektrale Reflexionsgrade sind, wobei die Anzahl der spektralen Reflexionsgrade durch Division eines Wellenlängenbereichs von 400 nm bis 700 nm durch einen Einheitswellenlängenbereich geeigneter Größe erhalten wird.

8. Verfahren zur Erstellung eines Farbvorhersagemodells nach einem der Ansprüche 1 bis 6, wobei die Spektraleigenschaften spektrale Reflexionsgrade, spektrale Absorptionsfaktoren oder spektrale Absorptionskoeffizienten sind.

9. Verfahren zur Erstellung eines Farbvorhersagemodells nach einem der Ansprüche 1 bis 8, wobei die Farbwerte die Spektraleigenschaften sind.

10. Verfahren zur Erstellung eines Farbvorhersagemodells nach Anspruch 9, wobei der Lehrdatenerfassungsschritt (S100) umfasst:

   einen Farbkartendruckschritt (S102) zum Drucken der Farbkarte zum Erzeugen jedes Teils der Lehrdaten; und einen ersten Spektraleigenschaftenmessschritt (S104) zum Messen der Spektraleigenschaften der Referenzstelle (PA2) und der Spektraleigenschaften der Farbvorhersagezielstelle für die in dem Farbkartendruckschritt gedruckte Farbkarte.

11. Verfahren zur Erstellung eines Farbvorhersagemodells nach einem der Ansprüche 1 bis 8, wobei die Farbwerte Tonwerte sind.

12. Verfahren zur Erstellung eines Farbvorhersagemodells nach Anspruch 11, wobei der Lehrdatenerfassungsschritt (S200) umfasst:

   einen Farbkartendruckschritt (S202) zum Drucken der Farbkarte zum Erzeugen jedes Teils der Lehrdaten; einen ersten Spektraleigenschaftenmessschritt (S204) zum Messens der Spektraleigenschaften der Referenzstelle (PA2) und der Spektraleigenschaften der Farbvorhersagezielstelle für die in dem Farbkartendruckschritt gedruckte Farbkarte; und einen Farbwertumwandlungsschritt (S206) zum Umwandeln der Spektraleigenschaften der im ersten Spektraleigenschaftenmessschritt gemessenen Farbvorhersagezielstelle in die Tonwerte.

13. Verfahren zur Erstellung eines Farbvorhersagemodells nach einem der Ansprüche 1 bis 12, wobei die Farbkarte ferner eine Vielzahl von Stellen (72) eines zweiten Typs umfasst, die durch Auftragen der Tinte auf eine schwarze Tinte mit Tintendichten der Vielzahl von Niveaus erhalten werden.

14. Verfahren zur Erstellung eines Farbvorhersagemodells nach Anspruch 1, wobei

   die Farbkarte ferner eine Vielzahl von Stellen des zweiten Typs (72) umfasst, die durch Auftragen der Tinte auf eine schwarze Tinte mit Tintendichten der Vielzahl von Niveaus erhalten werden, und die Referenzstelle (PA2) eine Stelle mit einer maximalen Farbdichte unter der Vielzahl von Stellen des ersten Typs (71) und eine Stelle mit einer minimalen Farbdichte unter der Vielzahl von Stellen des zweiten Typs (72) umfasst.

15. Farbvorhersagemodellerstellungsprogramm zum Erstellen eines Farbvorhersagemodells zum Vorhersagen einer Farbe einer Stelle in einer Farbkarte, die eine Vielzahl von Stellen (71) eines ersten Typs umfasst, die durch Auftragen einer Tinte auf ein Basismaterial mit Tintendichten einer Vielzahl von Niveaus erhalten werden, wobei das Farbvorhersagemodellerstellungsprogramm, wenn es auf einem Computer ausgeführt wird, den Computer veranlasst, das Verfahren nach einem der Ansprüche 1 bis 14 auszuführen.

**Revendications**

1. Méthode de construction de modèle de prédiction de couleur pour construire un modèle de prédiction de couleur pour prédire une couleur d'un aplat dans un nuancier comportant une pluralité d'aplats de premier type (71) obtenus par application d'une encre sur un matériau de base avec des densités d'encre d'une pluralité de niveaux, la méthode de construction de modèle de prédiction de couleur comprenant :

   une étape d'acquisition de données d'enseignement (S100, S200) pour acquérir une pluralité d'éléments de données d'enseignement comportant des caractéristiques spectrales d'un aplat de référence (PA2) qui est un aplat prescrit dans le nuancier et des valeurs de couleur d'un aplat cible de prédiction de couleur dans le nuancier, l'aplat cible de prédiction de couleur étant au moins un aplat parmi des aplats dans le nuancier à l'exclusion des aplats ayant une densité d'encre maximale ou une densité d'encre minimale parmi la pluralité d'aplats de premier type ; et une étape d'apprentissage (S110, S210) pour effectuer un apprentissage automatique par un réseau neuronal (73) qui prend les caractéristiques spectrales de l'aplat de référence (PA2) en tant que données d'entrée et prend les valeurs de couleur de l'aplat cible de prédiction de couleur en tant que données de sortie, en utilisant la pluralité d'éléments de données d'enseignement.

2. Méthode de construction de modèle de prédiction de couleur selon la revendication 1, dans laquelle l'aplat de référence (PA2) est un aplat ayant une densité d'encre maximale parmi la pluralité d'aplats de premier type (71).

3. Méthode de construction de modèle de prédiction de couleur selon la revendication 1, dans laquelle l'aplat de référence (PA2) comporte un aplat ayant une densité d'encre maximale parmi la pluralité d'aplats de premier type (71) et un aplat ayant une densité d'encre minimale parmi la pluralité d'aplats de premier type (71) .

4. Méthode de construction de modèle de prédiction de couleur selon l'une quelconque des revendications 1 à 3, dans laquelle

l'aplat cible de prédiction de couleur comporte N aplats,
N éléments de réseaux neuronaux (73(1)-73(20)) sont préparés selon une correspondance biunivoque avec les N aplats, et
lors de l'étape d'apprentissage (S110, S210), un apprentissage automatique est effectué pour chaque réseau neuronal (73(1)-73(20)), en utilisant les valeurs de couleur d'un aplat correspondant et les caractéristiques spectrales de l'aplat de référence (PA2) .

5. Méthode de construction de modèle de prédiction de couleur selon l'une quelconque des revendications 1 à 3, dans laquelle

l'aplat cible de prédiction de couleur comporte N aplats,
un seul élément de réseau neuronal (73) qui prend les caractéristiques spectrales de l'aplat de référence (PA2) en tant que données d'entrée et prend des valeurs de couleur des N aplats en tant que données de sortie est préparé, et
lors de l'étape d'apprentissage (S110, S210), l'apprentissage automatique est effectué par le seul élément du réseau neuronal (73), en utilisant les caractéristiques spectrales de l'aplat de référence (PA2) et les valeurs de couleur des N aplats.

6. Méthode de construction de modèle de prédiction de couleur selon l'une quelconque des revendications 1 à 5, dans laquelle

une couleur de chaque aplat dans le nuancier est spécifiée par K caractéristiques spectrales,
le réseau neuronal (73) comporte une couche d'entrée, une couche cachée, et une couche de sortie,
la couche cachée étant une couche intermédiaire entre la couche d'entrée et la couche de sortie, et étant reliée à la couche d'entrée et à la couche de sortie de sorte que la couche d'entrée soit reliée à la couche de sortie à travers de la couche cachée,
la couche d'entrée comporte K unités pour un aplat servant d'aplat de référence (PA2), et
la couche de sortie comporte K unités pour un aplat servant d'aplat cible de prédiction de couleur.

7. Méthode de construction de modèle de prédiction de couleur selon la revendication 6, dans laquelle les K caractéristiques spectrales sont des réflectances spectrales, le nombre des réflectances spectrales étant obtenu en divisant une plage de longueurs d'onde de 400 nm à 700 nm par une plage de longueurs d'onde unitaires d'une taille appropriée.

8. Méthode de construction de modèle de prédiction de couleur selon l'une quelconque des revendications 1 à 6, dans laquelle les caractéristiques spectrales sont les uns quelconques parmi des réflectances spectrales, des facteurs d'absorption spectrale et des coefficients d'absorption spectrale.

9. Méthode de construction de modèle de prédiction de couleur selon l'une quelconque des revendications 1 à 8, dans laquelle les valeurs de couleur sont les caractéristiques spectrales.

10. Méthode de construction de modèle de prédiction de couleur selon la revendication 9, dans laquelle l'étape d'acquisition de données d'enseignement (S100) comporte :

une étape d'impression de nuancier (S102) pour imprimer le nuancier pour générer chaque élément de données d'enseignement ; et

une première étape de mesure de caractéristiques spectrales (S104) pour mesurer les caractéristiques spectrales de l'aplat de référence (PA2) et les caractéristiques spectrales de l'aplat cible de prédiction de couleur pour le nuancier imprimé lors de l'étape d'impression du nuancier.

11. Méthode de construction de modèle de prédiction de couleur selon l'une quelconque des revendications 1 à 8, dans laquelle les valeurs de couleur sont des niveaux de tons.

12. Méthode de construction de modèle de prédiction de couleur selon la revendication 11, dans laquelle l'étape d'acquisition de données d'apprentissage (S200) comporte :

une étape d'impression de nuancier (S202) pour imprimer le nuancier pour générer chaque élément de données d'enseignement ;

une première étape de mesure de caractéristiques spectrales (S204) pour mesurer les caractéristiques spectrales de l'aplat de référence (PA2) et les caractéristiques spectrales de l'aplat cible de prédiction de couleur pour le nuancier imprimé lors de l'étape d'impression du nuancier ; et

une étape de conversion de valeur de couleur (S206) pour convertir les caractéristiques spectrales de l'aplat cible de prédiction de couleur mesurées lors de la première étape de mesure de caractéristiques spectrales en les niveaux de tons.

13. Méthode de construction de modèle de prédiction de couleur selon l'une quelconque des revendications 1 à 12, dans laquelle le nuancier comporte en outre une pluralité d'aplats de second type (72) obtenue en appliquant l'encre sur une encre noire avec des densités d'encre de la pluralité de niveaux.

14. Méthode de construction de modèle de prédiction de couleur selon la revendication 1, dans laquelle

le nuancier comporte en outre une pluralité d'aplats de second type (72) obtenue en appliquant l'encre sur une encre noire avec des densités d'encre de la pluralité de niveaux, et

l'aplat de référence (PA2) comporte un aplat ayant une densité d'encre maximale parmi la pluralité d'aplats de premier type (71), et un aplat ayant une densité d'encre minimale parmi la pluralité d'aplat de second type (72).

15. Programme de construction de modèle de prédiction de couleur pour construire un modèle de prédiction de couleur pour prédire une couleur d'un aplat dans un nuancier comportant une pluralité d'aplats de premier type (71) obtenue en appliquant une encre sur un matériau de base avec des densités d'encre d'une pluralité de niveaux,

le programme de construction de modèle de prédiction de couleur amenant, lorsqu'il est exécuté sur un ordinateur, ledit ordinateur à exécuter la méthode selon l'une quelconque des revendications 1 à 14.

# Fig.1

# Fig.2

# Fig.3

# Fig.4

CxF CHART

COLORIMETRY

COLORIMETRY

TEACHING DATA

(LEARNING STAGE)

NEURAL NETWORK ⌇73

(PREDICTION STAGE)

SPECTRAL REFLECTANCES
OF REFERENCE PATCH
FOR COLOR PREDICTION
TARGET INK

21

# Fig.5

# Fig.6

# Fig.7

73 (1)

| NEURAL NETWORK |
|---|

73 (2)

| NEURAL NETWORK |
|---|

73 (3)

| NEURAL NETWORK |
|---|

73 (4)

| NEURAL NETWORK |
|---|

73 (5)

| NEURAL NETWORK |
|---|

73 (6)

| NEURAL NETWORK |
|---|

73 (7)

| NEURAL NETWORK |
|---|

73 (8)

| NEURAL NETWORK |
|---|

73 (9)

| NEURAL NETWORK |
|---|

73 (10)

| NEURAL NETWORK |
|---|

73 (11)

| NEURAL NETWORK |
|---|

73 (12)

| NEURAL NETWORK |
|---|

73 (13)

| NEURAL NETWORK |
|---|

73 (14)

| NEURAL NETWORK |
|---|

73 (15)

| NEURAL NETWORK |
|---|

73 (16)

| NEURAL NETWORK |
|---|

73 (17)

| NEURAL NETWORK |
|---|

73 (18)

| NEURAL NETWORK |
|---|

73 (19)

| NEURAL NETWORK |
|---|

73 (20)

| NEURAL NETWORK |
|---|

# Fig.8

```
        ┌─────────────────────────────┐
        │   COLOR PREDICTION PROCESS  │
        └──────────────┬──────────────┘
                       │
                       ▼
S100 ┌─────────────────────────────────────────────┐  ┐
     │          ACQUIRE TEACHING DATA              │  │
     └──────────────────┬──────────────────────────┘  │
                        │                              ├ 61
                        ▼                              │
S110 ┌─────────────────────────────────────────────┐  │
     │               LEARNING                      │  │
     └──────────────────┬──────────────────────────┘  ┘
                        │
                        ▼
S120 ┌─────────────────────────────────────────────┐  ┐
     │ MEASURE SPECTRAL REFLECTANCES OF SOLID PATCH│  │
     │ FOR COLOR PREDICTION TARGET INK             │  │
     └──────────────────┬──────────────────────────┘  ├ 62
                        │                              │
                        ▼                              │
S130 ┌─────────────────────────────────────────────┐  │
     │ INFERENCE (PREDICTION OF SPECTRAL REFLECTANCE)│ │
     └──────────────────┬──────────────────────────┘  ┘
                        │
                        ▼
                  ┌──────────┐
                  │   END    │
                  └──────────┘
```

# Fig.9

```
        ┌─────────────────────────────┐
        │    ACQUIRE TEACHING DATA    │
        └──────────────┬──────────────┘
                       │
                       ▼
S102 ┌─────────────────────────────────────────────┐
     │            PRINT CxF CHART                  │
     └──────────────────┬──────────────────────────┘
                        │
                        ▼
S104 ┌─────────────────────────────────────────────┐
     │        MEASURE SPECTRAL REFLECTANCES        │
     └──────────────────┬──────────────────────────┘
                        │
                        ▼
                  ┌──────────┐
                  │  RETURN  │
                  └──────────┘
```

# Fig.10

```
         ┌100              ┌200              ┌300              ┌500
┌──────────────┐      ┌──────────────┐  ┌──────────────┐  ┌──────────────┐
│ PRINT  DATA  │ Dch  │ PLATE        │PL│ PRINTING     │CH│              │
│ GENERATION   ├─────▶│ MAKING       ├─▶│ APPARATUS    ├─▶│ COLORIMETER  │
│ APPARATUS    │      │ APPARATUS    │  │              │  │              │
└───────▲──────┘      └──────────────┘  └──────────────┘  └──────────────┘
        │                                                         │Dcm
        └─────────────────────────────────────────────────────────┘
```

# Fig.11

# Fig.12

# Fig.13

INPUT
LAYER

HIDDEN
LAYER

OUTPUT
LAYER

# Fig.14

# Fig.15

| 100% | 90% | 80% | 70% | 60% | 50% | 40% | 30% | 20% | 10% | 0% |

← 81

← 83

← 82

# Fig.16

REFLECTANCE

84

86

85

V2

V1

V3

V5

V4

WAVELENGTH          W

# Fig.17

75(1)
⋮
75(36)

73

NEURAL
NETWORK

87(1)
⋮
87(36)

88

COLOR VALUE
CONVERTER

76(1)
⋮
76(36)

# Fig.18

```
           ( COLOR PREDICTION PROCESS )
                        │
                        ▼
S200 │        ACQUIRE TEACHING DATA              │
                        │
                        ▼
S210 │              LEARNING                     │
                        │
                        ▼
S220 │ MEASURE SPECTRAL REFLECTANCES OF SOLID PATCH │
     │ FOR COLOR PREDICTION TARGET INK              │
                        │
                        ▼
S230 │    INFERENCE (PREDICTION OF TONE VALUES)   │
                        │
                        ▼
S240 │ CONVERT TONE VALUES INTO SPECTRAL REFLECTANCES │
                        │
                        ▼
                     ( END )
```

# Fig.19

```
           ( ACQUIRE TEACHING DATA )
                        │
                        ▼
S202 │           PRINT CxF CHART                 │
                        │
                        ▼
S204 │      MEASURE SPECTRAL REFLECTANCES        │
                        │
                        ▼
S206 │ CONVERT SPECTRAL REFLECTANCES INTO TONE VALUES │
                        │
                        ▼
                   ( RETURN )
```

# Fig.20

FOREGROUND COLOR
$(X_f, Y_f, Z_f)$

BACKGROUND COLOR
$(X_b, Y_b, Z_b)$

# Fig.21

PA92  PA95  PA94

100%  90%  80%  70%  60%  50%  40%  30%  20%  10%  0%

PA91  PA93

# Fig.22

```
          ┌─────────────┐
          │    START     │
          └──────┬──────┘
                 │
                 ▼
S900 ┌──────────────────────────────────────┐
     │         PRINT CxF CHART              │
     └──────────────┬───────────────────────┘
                    │
                    ▼
S910 ┌──────────────────────────────────────┐
     │    CALCULATE OVERPRINT COEFFICIENT    │
     └──────────────┬───────────────────────┘
                    │
                    ▼
S920 ┌──────────────────────────────────────┐
     │        OBTAIN Xb, Yb, AND Zb          │
     └──────────────┬───────────────────────┘
                    │
                    ▼
S930 ┌──────────────────────────────────────┐
     │        OBTAIN Xf, Yf, AND Zf          │
     └──────────────┬───────────────────────┘
                    │
                    ▼
S940 ┌──────────────────────────────────────┐
     │  CALCULATE OVERPRINT PREDICTION VALUE │
     └──────────────┬───────────────────────┘
                    │
                    ▼
          ┌─────────────┐
          │     END      │
          └─────────────┘
```

# Fig.23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6281501 A

- US 20100091305 A1